# EUROPEAN PATENT SPECIFICATION

(11) **EP 0 203 599 B1**
(45) Date of publication and mention of the grant of the patent: **16.02.1994**
(21) Application number: 86107277.5
(22) Date of filing: 28.05.1986
(51) Int. Cl.: G06F 7/04, G06F 7/48

(54) **Apparatus to determine conditions in a calculating unit**
Gerät zur Feststellung von Bedingungen in einer Recheneinheit
Appareil pour la détermination des conditions dans une unité de calcul

(30) Priority: 30.05.1985 US 741652
(43) Date of publication of application: 03.12.1986
(73) Proprietor: Hewlett-Packard Company, Palo Alto, California 94304 (US)
(72) Inventor: Baum, Allen J., Palo Alto, CA. 94306 (US); Bryg, William R., Saratoga, CA. 95070 (US)
(74) Representative: Liesegang, Roland, Dr.-Ing.

(56) References cited:
- FR-A- 2 406 852
- ELECTRONIC DESIGN, vol. 29, no. 25, 10th December 1981, pages 104-112, Waseca, MN, US; M.J. MILLER et al.: "Bit-slice processor speeds through BCD math"
- IBM FIELD ENGINEERING THEORY OF OPERATION, 5th edition, 1965, pages 35-41, IBM Corp., Poughkeepsie, NY, US
- IBM TECHNICAL DISCLOSURE BULLETIN, vol. 18, no. 9, February 1976, pages 3099-3104, New York, US; K. MARUYAMA: "Circuit for conditional substring function"

## Description

The invention relates to an apparatus for performing operations on more than one operand and for producing a result of the operation as well as a condition result.

An apparatus of this kind is for example described in Electronic Design, Vol. 29, No. 25, 1981, pp. 104 to 112; IBM Field Engineering Theory of Operation, 5th edition, 1965, Poughkeepsie, pp. 35 to 41; and IBM Technical Disclosure Bulletin, Vol. 18, No. 9, 1976, pp. 3099 to 3104. The systems disclosed in these documents comprise first and second units for performing the desired tasks.

The present invention provides an apparatus for performing operations on a first operand and a second operand, comprising the features of claim 1.

In accordance with the preferred embodiment of the present invention, an apparatus is presented which produces condition signals based on portions of the result of a calculation performed on one or more operands by an ALU. Operations such as "Add and Check for Overflow" or "Add to Complement and Check for Overflow" or "Exclusive-Or (XOR) and Check for Zero" may be performed based on the portions of the result.

### Brief Description of the Drawings

Figure 1 shows an arithmetic logic unit (ALU) receiving two operands and producing a result.

Figure 2 is a more detailed drawing of the ALU shown in Figure 1.

Figure 3 shows the logical implementation of a circuit within the ALU shown in Figure 1 which checks for unit zeros in a ALU resultant.

Figure 4 shows the logical implementation of a circuit within the ALU shown in Figure 1 which checks for carries out of units resulting from an operation between the two operands.

### Description of the Preferred Embodiment

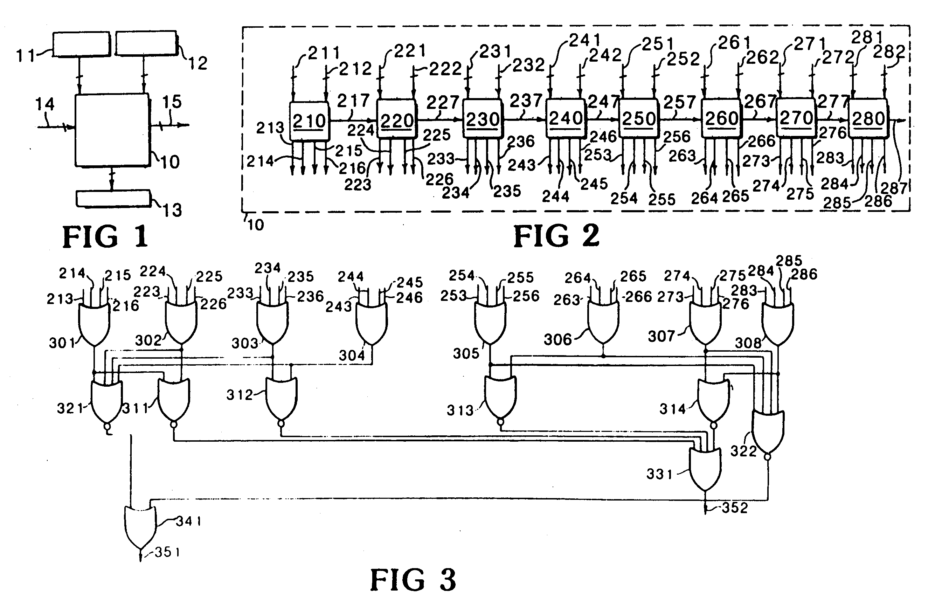

Figure 1 shows an arithmetic logic unit (ALU) 10 receiving an operand from a register 11, an operand from a register 12 and input from control lines 14. ALU produces a resultant which is places in register 13 and various condition outputs on condition lines 15.

Figure 2 shows ALU 10 being subdivided into eight units 210, 220, 230, 240, 250, 260, 270, and 280. Each unit from units 210, 220, 230, 240, 250, 260, 270, and 280, receives four bits from register 11 and four bits from register 12. Each unit from units 210, 220, 230, 240, 250, 260, 270, and 280, also produces an output on a carry-out line and output on four output lines which will be coupled to register 13. Lines labeled 211, 221, 231, 241, 251, 261, 271, and 281 each transfer four bits from register 11. Lines labeled 212, 222, 232, 242, 252, 262, 272, and 282 each transfer four bits from register 12. Lines 217, 227, 237, 247, 257, 267, 277, and 287 are carry-out lines from units 210, 220, 230, 240, 250, 260, 270, and 280, as shown. Lines 213-216, 223-226, 233-236, 243-246, 253-256, 263-266, 273-276, and 283-286 are all output lines and originate from units 210, 220, 230, 240, 250, 260, 270, and 280, as shown.

When, as shown in Figure 2, ALU 10 is subdivided into eight units, output from these units can be used to perform character matching. For example, suppose it was desired to search for the character "S", encoded in an eight-bit ASCII code. Into register 11 is loaded four bytes of data to be searched. Into register 12 is loaded the ASCII code representation of "SSSS". ALU 10 then performs a Boolean "Exclusive Or" (XOR) between an operand in register 11 and an operand in register 12. The output of this data from ALU 10 is checked for an eight-bit string which are all at logic zero. If all the bits in an eight bit string are at logic zero, then a letter "S" has been found in the data originally in register 11.

Figure 3 shows an implementation of a circuit which performs zero-checking on the output of ALU 10. Logic gates 301-308 each of which performs a "Boolean Or" (OR) operation have inputs coupled to lines 213-216, 223-226, 233-236, 243-246, 253-256, 263-266, 273-276, and 283-286 which originate from units 210, 220, 230, 240, 250, 260, 270, and 280 shown in Figure 2. Outputs from logic gates 301-308 are coupled to logic gates 311-314, as shown. Logic gates 311-314 each performs a "Boolean Nor" (NOR) operation. Outputs from logic gates 311-314 are coupled to logic gate 331. Logic gate 331 performs an OR operation.

As can be seen from the circuit in Figure 3, bits are checked in four eight-bit segments. If all the bits in any of the eight-bit segments are at logic zero, then a logic one will appear at an output 352 of logic gate 331.

Similarly zero-checking can occur for sixteen-bit segments. This is implemented by the circuit in Figure 3 by the use of logic gates 321 and 322 each of which performs a NOR function, and by a logic gate 341 which performs an OR function. If all the bits in either of two sixteen-bit segments are at logic zero, then a logic one will appear at an output 351 of logic gate 341.

Another use for output from the eight subdivided units shown in Figure 2, is for range checking. For instance, when numbers are encoded as binary coded decimals (BCD) each four-bit unit should contain a number in the range from zero (0000base2) to nine (1001base 2). In order to check the range of eight four-bit BCD digits, these digits may be loaded into register 11. Into register 12 is also loaded eight four-bit BCD digits all sixes, i.e., '66666666'. ALU performs an add between the operand in register 11 and the operand in register 12 and places the answer in register 13. Carry-out lines 217, 227, 237, 247, 257, 267, 277, and 287 from units 210, 220, 230, 240, 250, 260, 270, and 280 are checked for a logic one. If any of these carry-out lines are at logic one, then there has been an overflow, indicating one of the eight digits is improperly BCD encoded.

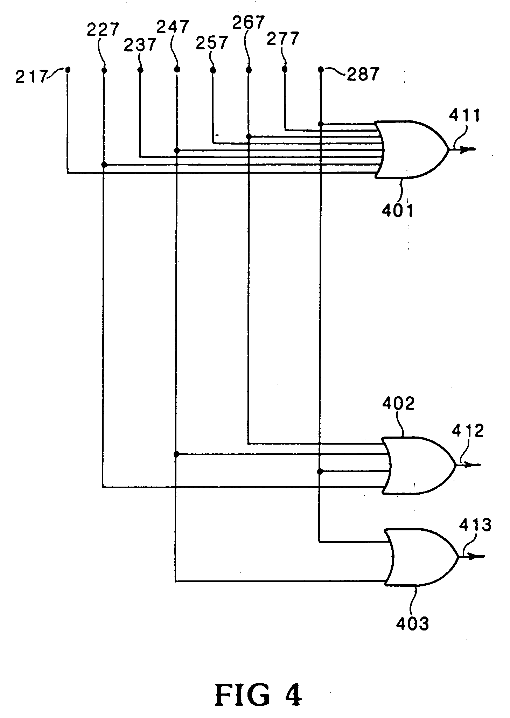

Figure 4 shows a circuit implementing the logic necessary to check carry-out lines 217, 227, 237, 247, 257, 267, 277, and 287. For BCD checking, carry-out lines 217, 227, 237, 247, 257, 267, 277, and 287 are coupled to logic gate 401 which performs an OR function. If there is an overflow on any of the units from units 210, 220, 230, 240, 250, 260, 270, and 280, then output 411 of logic gate 401 will be at logic 1.

Similarly, range checking for eight-bit segments can be done by checking output 412 of logic gate 402 which performs an OR function. Also, range checking for sixteen-bit segments can be done by checking output 413 of logic gate 413 which also performs an OR function.

A variety of other ALU instructions can be used for range checking. For instance, instead of and "Add and Check for Carry", ALU could add the complement of the operand in Register 12 with the operand in register 11. In this case, eight four-bit BCD digits would be loaded into register 12, having the value '99999999'.

## Claims

1. An apparatus for performing operations on a first operand (11) and a second operand (12), comprising: calculating means (10) for receiving the first operand (11) and the second operand (12) and for producing a plurality of resultant bits (213-216, 223-226,233-236,243-246,253-256,263-266,273-276,283-286);
first condition means (301-308,321,322,341), coupled to the calculating means, for checking for a first plurality of subsets each comprising a first number of contiguous resultant bits, whether all the resultant bits within any of the subsets are equal to zero; and,
second condition means (301-308,311-314,331) coupled to the calculating means, for checking for a second plurality of subsets, each comprising a second number of contiguous resultant bits, whether all the resultant bits within any of the subsets are equal to zero;
wherein the first number does not equal the second number.

2. An apparatus as in claim 1 wherein the calculating means comprises a plurality of units (210,220,230,240, 250,260,270,280) each unit having a carry-out bit (211,221,231,241,251,261,271,281), and wherein the apparatus additionally includes:
first carry-out condition means (402), coupled to the plurality of units for checking, whether a first subset of the carry-out bits are all equal to zero; and,
second carry-out condition means (401), coupled to the plurality of units, for checking, whether a second subset of the carry-out bits are all are equal to zero;
wherein the first subset does not equal the second subset.

## Patentansprüche

1. Vorrichtung zum Anwenden von Operationen auf einen ersten Operanden (11) und einen zweiten Operanden (12), welche umfaßt:
eine Recheneinrichtung (10) zum Empfangen des ersten Operanden (11) und des zweiten Operanden (12) und zum Erzeugen einer Vielzahl von Resultatbits (213-216, 223-226, 233-236, 243-246, 253-256, 263-266, 273-276, 283-286),
eine erste Bedingungseinrichtung (301-308, 321, 322, 341), welche mit der Recheneinrichtung verbunden ist, um eine erste Vielzahl von Untergruppen, welche jeweils eine erste Anzahl von zusammenhängenden Resultatbits umfassen, daraufhin zu überprüfen, ob alle Resultatbits in einer der Untergruppen gleich Null sind, und
eine zweite Bedingungseinrichtung (301-308, 311-314, 331), welche mit der Recheneinrichtung verbunden ist, um eine zweite Vielzahl von Untergruppen, welche jeweils eine zweite Anzahl von zusammenhängenden Resultatbits umfassen, daraufhin zu überprüfen, ob alle Resultatbits innerhalb einer der Untergruppen gleich Null sind,
wobei die erste Anzahl nicht gleich der zweiten Anzahl ist.

2. Vorrichtung nach Anspruch 1, bei welcher die Recheneinrichtung eine Vielzahl von Einheiten (210, 220, 230, 240, 250, 260, 270, 280) umfaßt, wobei jede Einheit ein Übertragsbit (211, 221, 231, 241, 251, 261, 271, 281) besitzt, und wobei die Vorrichtung weiterhin enthält:
eine erste Übertrags-Bedingungseinrichtung (402), welche mit der Vielzahl von Einheiten verbunden ist, zum Überprüfen, ob eine erste Untergruppe von Übertragsbits vollständig gleich Null ist, und
eine zweite Übertrags-Bedingungseinrichtung (401), welche mit der Vielzahl von Einheiten verbunden ist, zum Überprüfen, ob eine zweite Untergruppe von Übertragsbits vollständig gleich Null ist, wobei die erste Untergruppe nicht gleich der zweiten Untergruppe ist.

## Revendications

1. Appareil permettant de réaliser des opérations sur un premier opérande (11) et sur un second opérande (12), comprenant : un moyen de calcul (10) pour recevoir le premier opérande (11) et le second opérande (12) et pour produire une pluralité de bits résultants (213-216, 223-226, 233,-236, 243-246, 253-256, 263-266, 273-276 et 283-286) ;
un premier moyen de condition (301-308, 321, 322, 341), couplé au moyen de calcul, pour effectuer une vérification sur une pluralité de sous-jeux, chacun comprenant un premier nombre de bits résultants contigus, pour voir si oui ou non tous les bits résultants contenus dans l'un quelconque des sous-jeux sont égaux à zéro ; et
un second moyen de condition (301-308, 311-314, 331) couplé au moyen de calcul, pour effectuer une vérification sur une seconde pluralité de sous-jeux, chacun comprenant un second nombre de bits résultants contigus, pour voir si oui ou non tous les bits résultants contenus dans l'un quelconque des sous-jeux sont égaux à zéro,
dans lequel le premier nombre n'est pas égal au second nombre.

2. Appareil selon la revendication 1, dans lequel le moyen de calcul comprend une pluralité d'unités (210, 220, 230, 240, 250, 260, 270 et 280), chaque unité comportant un bit de retenue (211, 221, 231, 241, 251, 261, 271 et 281), et dans lequel l'appareil inclut en outre :
un premier moyen de condition de retenue (402), couplé à la pluralité d'unités, pour vérifier si oui ou non un premier sous-jeu des bits de retenue sont tous égaux à zéro ; et
un second moyen de condition de retenue (401), coupé à la pluralité d'unités, pour vérifier si oui ou non un second sous-jeu des bits de retenue sont tous égaux à zéro,
dans lequel le premier sous-jeu n'est pas égal au second sous-jeu.
